Europäisches Patentamt

European Patent Office

Office européen des brevets

(19)

(11) Publication number: **0 239 184**

**A2**

(12) **EUROPEAN PATENT APPLICATION**

(21) Application number: **87300441.0**

(22) Date of filing: **20.01.87**

(51) Int. Cl.⁴: **G01N 35/00**

(30) Priority: **21.01.86 GB 8601338**

(43) Date of publication of application:
**30.09.87 Bulletin 87/40**

(84) Designated Contracting States:
**DE FR GB IT**

(71) Applicant: **IMPERIAL TOBACCO LIMITED
Hartcliffe
Bristol, BS99 7UJ(GB)**

(72) Inventor: **Long, Terence Michael
40 Elborough Avenue
Yatton Bristol, BS19 4DS(GB)**
Inventor: **Johnson, Joseph Copeland
75 Frampton End Road
Frampton Cotterell Bristol, BS17 2JY(GB)**
Inventor: **Peirce, Peter Eric
104 Fouracre Crescent
Downend Bristol, BS16 6PU(GB)**
Inventor: **Williams, Kenneth George
8 Orchard Road
Kingswood Bristol, BS15 2TH(GB)**

(74) Representative: **Stuart, Ian Alexander et al
MEWBURN ELLIS & CO. 2/3 Cursitor Street
London EC4A 1BQ(GB)**

(54) **Chemical analysis system.**

(57) A system for automatically analysing a substance selected from tobacco and smoking-related products for one or more chemical constituents comprises a robot 10 for preparing a plurality of extracts of said substance, a discrete analyser 50,52 for automatically carrying out chemical analyses of said extracts to produce chemical analysis data therefrom, a first computer 30 for instructing and controlling the robot 10, a second computer 40 for instructing and controlling the analyser 50,52 and for receiving and processing chemical analysis data therefrom, an interface 20 for passing control and data signals between the computers 30,40, and a display unit 72 for displaying processed analysis data received by the second computer 40.

FIG.2

## CHEMICAL ANALYSIS SYSTEM

This invention concerns a chemical analysis system, in particular a method and apparatus for the automated chemical analysis of smoking substances and smoking-related products.

"Smoking substances" include not only tobacco but smokeable materials derived directly or indirectly from tobacco, non-tobacco smokeable materials whether natural or synthetic or any combination of these materials. "Smoking-related products" include smoke from smoking substances, material for wrapping a smoking substance so as to form a smokeable article (e.g. cigarette paper), and filter material for use with smokeable articles (e.g. cigarette filter rods).

In the quality control of cigarettes or other smoking articles it is customary to carry out chemical analyses of tobacco and smoking-related products. These analyses include analyses for naturally occurring sugars and nicotine in tobacco, glycerol triacetate (triacetin) in cellulose acetate based filter rod material, and citrate salts, which are used as burn modifiers, in cigarette paper.

Hitherto, such analyses have been carried out manually by a number of laboratory personnel, each assigned to a separate analytical task, and are therefore susceptible to possible inaccuracies and inconsistencies.

It is a purpose of the present invention to enable routine chemical analyses of tobacco and smoking-related products to be carried out automatically and simultaneously. By means of the invention the analyses are carried out more efficiently, more accurately, and more consistently, than can be carried out manually by a number of laboratory personnel.

According to a first aspect of the present invention there is provided a method for automatically analysing a substance selected from the group consisting of tobacco and smoking-related products for a plurality of chemical constituents, the method comprising:

(a) preparing a plurality of extracts of said substance by means of a robotic device;

(b) automatically carrying out a plurality of chemical analyses of said plurality of extracts substantially simultaneously and producing chemical analysis data therefrom;

(c) instructing and controlling the robotic device in its operations by a first computer means;

(d) instructing and controlling the analysis apparatus and receiving and processing the chemical analysis data therefrom by a second computer means; and

(e) displaying processed analysis data received by the second computer means.

According to a second aspect of the present invention there is provided an apparatus for automatically analysing a substance selected from the group consisting of tobacco and smoking-related products for one or more chemical constituents, the apparatus comprising:

(a) a robotic device for preparing a plurality of extracts of said substance;

(b) an analytical apparatus for automatically carrying out substantially simultaneously chemical analyses of said plurality of extracts and adapted to produce chemical analysis data therefrom;

(c) first computer means adapted to instruct and control the robotic device in its operations;

(d) second computer means adapted to instruct and control the analysis apparatus and to receive and process chemical analysis data therefrom;

(e) an interface adapted to pass control and data signals between the first and second computer means; and

(f) display means adapted to display processed analysis data received by the second computer means.

The invention will now be described by way of example only with reference to the accompanying diagrams in which:

Fig. 1 is a block diagram showing the overall layout of an embodiment of the system of the invention; and

Fig. 2 is a schematic diagram of a discrete analyser for use in an embodiment of the invention.

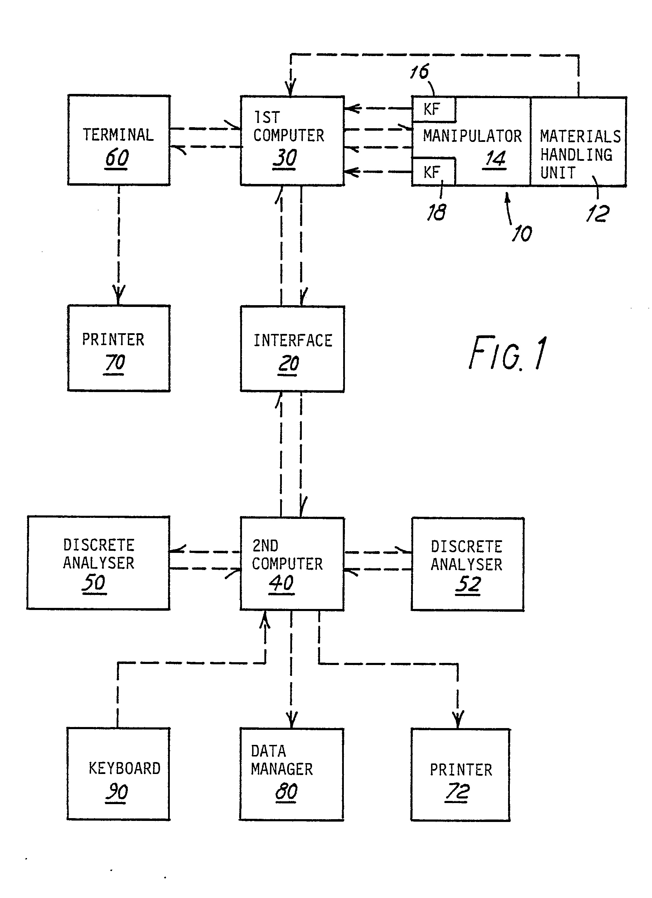

Referring to Fig. 1 there is shown an industrial robotic device 10 interfaced to a first computer 30 which in turn is interfaced via an interface 20 to a second computer 40.

First and second discrete analysers 50,52 respectively are interfaced to the second computer 40.

A keyboard terminal 60 is interfaced to computer 30 and an output line from the terminal 60 connects to a printer 70.

An output line from the computer 40 likewise connects to a second printer 72 (which may be printer 70). A second output line from computer 40 also connects to a data manager device 80. An input line to computer 40 is provided from a keyboard 90.

The automated analysis system of the invention may be directed to the analysis of tobacco for sugars and nicotine, the analysis of tobacco smoke extract for water content, and the analysis of smoking-related products such as cigarette paper for its citrate content, and cellulose acetate filter plug material for its triacetin content.

In operating the exemplified system of the invention an operator prepares samples of tobacco and/or smoking-related products, places the samples on a pallet, places the pallet in a materials handling unit 12 of the robot 10, and enters pallet and sample identity codes into the data manager device 80.

The materials handling unit 12 transmits an identity code of the pallet to computer 30. From the identity code of the pallet, computer 30 determines what work is to be done on the samples in the pallet and instructs a manipulator part 14 of the robot 10 to count the samples and prepare extracts of the samples. After doing this the manipulator 14 loads the prepared extracts into a discrete analyser tray and places the tray in the materials handling unit 12. The identity of the tray is placed in an operational menu in the terminal 60.

For smoke water analysis the manipulator 14 injects the appropriate sample into Karl Fischer titrators 16,18. On completion of the water analysis on all the samples, computer 30 transmits data to the second, control, computer 40. Computer 40 applies accept or reject criteria to the water analysis results, files and prints out accepted data, and warns the operator of unacceptable or otherwise anomalous results.

The system operator selects from the menu a tray in the materials handling unit 12 and loads it into one or the other of the discrete analysers 50,52.

Computer 30 transmits a description of the tray to computer 40 which uses the description to assemble an analysis worklist for the discrete analyser. This worklist is transmitted to the appropriate discrete analyser on which the system operator initiates the analysis run.

The discrete analyser, 50 or 52 as the case may be, analyses the sample extracts, as will be described in more detail hereinafter, and transmits the results to computer 40.

Computer 40 applies accept or reject criteria, prints out and files accepted data, warns the operator of unacceptable results, and transmits completed results data files to the data manager 80.

The data manager 80 merges the results data files with the appropriate sample identity codes and processes the final results through a laboratory management database.

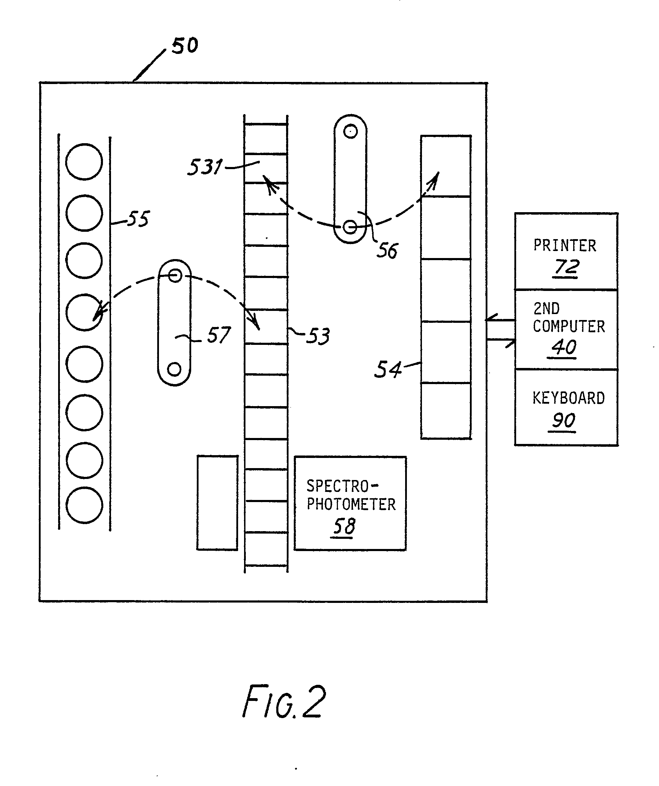

Figure 2 shows a schematic diagram of one of the discrete analysers (50) in conjunction with computer 40.

The discrete analyser 50 includes a rack of reaction cells 53, a rack of reagent cells 54, a rack of sample cells 55, a reagent dispenser 56, a sample dispenser 57, and a spectrophotometer 58.

The racks of reaction cells 53, reagent cells 54, and sample cells 55 are moved along tracks (not shown) by motors (not shown) controlled by computer 40.

The discrete analyser 50 automates quantitative spectrophotometric chemical analysis by mixing samples and chemical reagents in predetermined sequences in individual reaction cells 53 and measuring the resulting colour change (which is itself proportional to the concentration of the constituent of interest in the sample under analysis) by use of the spectrophotometer 58.

An important feature of the operation of the discrete analyser is the mechanical means for moving a number of individual reaction cells 53 in sequence (i.e. by means of the tracks and motors referred to above), to enable a number of chemical analyses to be processed simultaneously and thus give a rapid throughput of work. The principle of progressing analyses in separate or "discrete" cells gives the instrument its name of "discrete analyser".

In operation of the discrete analyser 50 an operator keys in instructions of the number of samples to be analysed and the analyses to be requested for each sample via keyboard 90 to computer 40.

Computer 40 instructs the reagent dispenser 56 to meter a quantity of the appropriate reagent from one of the reagent cells 54 into the next available reaction cell 53I, and positions the rack of reagent cells 54 accordingly by means of one of the motors referred to above.

If the analytical process requires an initial reading (before addition of a sample) the reaction cells rack is moved by a motor until the said available reaction cell 53I is in position in the spectrophotometer 58, whereupon an optical density reading of the reagent in cell 53I is measured.

The reaction cell 53I is then moved away from the spectrophotometer, and sample dispenser 57 meters a quantity of a first sample from the sample cells 55 into the reaction cell 53I. The contents of the cell are then mixed, suitably by rapid agitation of the reaction cell rack.

After a pre-set time, the reaction cell 53I is moved back to the spectrophotometer 58 and a final optical density reading taken. If necessary for the reaction chemistry, a second reagent addition may be made prior to final measurement.

The initial and final optical density readings are transmitted to computer 40 and are used by computer 40 in conjunction with a previously derived calibration factor to calculate the final concentration of the measured analyte. The result is printed on printer 72.

During the delay periods in this first sample analysis sequence the computer 40 initiates a second analysis. Similarly, if sufficient free time exists further analytical cycles are initiated before the first analysis is completed, until the entire instruction list has been completed.

If a new batch of analyses is to be processed, the operator loads a new rack of samples and checks that sufficient cells remain in the current reaction cell rack and that sufficient volumes of reagents remain for further use.

The operational cycle is then repeated as necessary.

Calibration is provided by measuring standard solutions, fitting a linear equation by a least squares regression algorithm on computer 40, and then entering the slope and intercept into software associated with the discrete analyser. From then on, each worklist of unknowns has a standard solution at the start and end, and a reference extract. The results for each worklist are normalised by the mean of the two standards, and the reference extract is checked against its target value. The limits of the two standard solutions before normalisation, and the allowable deviation of the reference extract are all present, and the final data are reported to the printer only if agreed criteria are met. These criteria are established by experiment for each analysis and allow automatic on-line verification of the results.

Computer 40 also stores results of the reference sample extract and carries out regular statistical cusum tests to alert the operator to any instrumental drift in measured results.

By means of the system of the invention the operator can arrange for automatic analyses of a number of constituents of tobacco and tobacco-related or smoking-related products to be carried out simultaneously on one machine together with automatic determination and reporting of results.

It will be appreciated that chemical methods hitherto used may not be appropriate or indeed possible on the discrete analyser because of the possibility of interference between reactions or cross-contamination of reagents under discrete analyser conditions. In these cases it will be necessary to modify substantially certain reactions or even to devise new chemical methods of analysis.

The apparatus and method of the invention may include automatic gas chromatography as an adjunct to the discrete analyser.

## Claims

1. A method for automatically analysing a substance selected from tobacco and smoking-related products for a plurality of chemical constituents, the method comprising:

(a) preparing a plurality of extracts of said substance by means of a robotic device (l0);

(b) automatically carrying out a plurality of chemical analyses of said plurality of extracts substantially simultaneously and producing chemical analysis data therefrom, by means of analytical apparatus (l6,l8,50,52);

(c) instructing and controlling the robotic device (l0) in its operations by computing means (30);

(d) instructing and controlling the analytical apparatus (50,52) and receiving and processing the chemical analysis data therefrom by computing means (40); and

(e) displaying processed analysis data received by the computing means (40; 30) from the analytical apparatus (50,52; 16,l8).

2. A method according to claim l wherein said analytical apparatus comprises a discrete analyser (50,52) which comprises: sample carrier means (55) for carrying a plurality of samples comprising said extracts; reagent carrier means (54) for carrying a plurality of reagents for use in carrying out said chemical analyses; contacting means (53,56,57) for contacting at least a portion of a selected sample with at least a portion of a selected reagent to produce an analyte; and measuring means (58) for providing an output related to the quantity of said analyte.

3. A method according to claim 2 wherein said contacting means comprises a plurality of reaction cells (53) and dispensing means (56,57) whereby a said selected sample portion and a said selected reagent portion are dispensed into a selected reaction cell (53l).

4. A method according to claim 3 wherein said plurality of reaction cells (53) is displaced so as to move said selected reaction cell (53l) between a first location at which said dispensing means (56) dispenses a said selected reagent portion into it, a second location at which the measuring means (58) acts on it, and a third location (which may be the same as or different from the first location) in which said dispensing means (57) dispenses a said selected sample portion in it.

5. A method according to claim 4 wherein the computing means (40) also controls displacement of the sample carrier means (55) so that a predetermined sample is located at said third location for dispensing into said selected reaction cell (53l); and displacement of the reagent carrier means (54) so that a predetermined reagent is located at said first location for dispensing into said selected reaction cell (531).

6. A method according to any preceding claim which comprises providing said computing means (30,40) operationally connected to the robotic device (14) and the analytical apparatus (50,52), and having data store means containing first data relating to the operation of the robotic device, and second data relating to the operation of the analytical apparatus; inputting (90) to the computing means (40) a first identity code relating to material for analysis; the computing means (30,40) being adapted, on receipt of a first identity code, to send appropriate data of said first data to the robotic device (14) to instruct it to prepare said plurality of extracts; and inputting to the computing means (40) a second identity code relating to a said plurality of extracts; the computing means (40) being adapted on receipt of a second identity code, to send appropriate data of said second data to the analytical apparatus (50,52) to instruct it to carry out said chemical analyses of a said plurality of extracts.

7. An apparatus for automatically analysing a substance selected from tobacco and smoking-related products for one or more chemical constituents, the apparatus comprising:

(a) a robotic device (10) for preparing a plurality of extracts of said substance;

(b) an analytical apparatus (50,52) for automatically carrying out substantially simultaneously chemical analyses of said plurality of extracts and adapted to produce chemical analysis data therefrom;

(c) computing means (30,40) adapted to instruct and control the robotic device (10) in its operations; and to instruct and control the analysis apparatus (50,52) and to receive and process chemical analysis data therefrom; and

(d) display means (72) adapted to display processed analysis data received by the computing means (40) from the analytical apparatus (50,52).

8. An apparatus as claimed in claim 7 wherein the robotic device (10) is adapted to execute any of a sequence of tasks in accordance with a menu of instructions held in the computing means (30) and accessible to a user.

9. Apparatus according to claim 7 or 8 wherein said analytical apparatus comprises a discrete analyser (50,52) which comprises: sample carrier means (55) for carrying a plurality of samples comprising said extracts; reagent carrier means (54) for carrying a plurality of reagents for use in carrying out said chemical analyses; contacting means (53,56,57) for contacting at least a portion of a selected sample with at least a portion of a selected reagent to produce an analyte; and measuring means (58) for providing an output related to the quantity of said analyte.

10. Apparatus according to claim 9 wherein said contacting means comprises a plurality of reaction cells (53) and dispensing means (56,57) whereby a said selected sample portion and a said selected reagent portion are dispensable into a selected reaction cell (531).

11. Apparatus according to claim 10 including means for effecting relative displacement between, on the one hand, the reaction cells (53) and, on the other hand, the measuring means (58) and the dispensing means (56,57) whereby a selected cell (531) can be acted on successively by both the measuring means and the dispensing means (56,57), in either order.

12. Apparatus according to claim 11 wherein the dispensing means (56,57) comprises a dispensing station relative to which both the reaction cells (53) and the sample carrier means (55) are displaceable, such that a selected reaction cell (531) and a selected sample can be located at the dispensing station; and transfer means (57) for transferring at least a portion of a selected sample at the station to said selected reaction cell.

13. Apparatus according to claim 11 or 12 wherein the dispensing means comprises a dispensing station relative to which both the reaction cells (53) and the reagent carrier means (54) are displaceable such that a selected reaction cell (531) and a selected reagent can be located at the dispensing station; and transfer means (56) for transferring at least a portion of a selected reagent at the station to said selected reaction cell (531).

14. Apparatus according to any of claims 7 to 13 wherein said computing means (30,40) are operationally connected to the robotic device (10) and the analytical apparatus (50,52), and have data store means containing first data relating to the operation of the robotic device (10), and second data relating to the operation of the analytical apparatus (50,52); there being first input means (60) for inputting to the computing means (30) a first identity code relating to material for analysis; the computing means (30) being adapted, on receipt of a first identity code, to send appropriate data of said first data to the robotic device (10) to instruct it to prepare said plurality of extracts; and there being second input means (90) for inputting to the computing means (40) a second identity code relating to a said plurality of extracts; the computing means (40) being adapted, on receipt of a second identity code, to send appropriate data of said second data to the analytical apparatus (50,52) to instruct it to carry out said chemical analyses of a said plurality of extracts.

15. Computer controlled analysis means for analysing a substance selected from tobacco and smoking-related products, comprising a discrete analyser (50,52) which comprises: sample carrier means (55) for carrying a plurality of samples comprising said extracts; reagent carrier means (54) for carrying a plurality of reagents for use in carrying out said chemical analyses; contacting means (53,56,57) for contacting at least a portion of a selected sample with at least a portion of a selected reagent to produce an analyte; and measuring means (58) for providing an output related to the quantity of said analyte; and computing means (40) coupled to the discrete analyser (50,52) and operable to control the operation thereof so that, in use, predetermined sample portions are contacted with respective predetermined reagent portions to provide analytes which are measured by the measuring means (58).

*FIG. 1*

FIG.2